Europäisches Patentamt

European Patent Office

Office européen des brevets

(11) Publication number: **0 397 309**
**A2**

# EUROPEAN PATENT APPLICATION

(21) Application number: **90303037.7**

(51) Int. Cl.5: **G01P 3/48, B60T 8/32**

(22) Date of filing: **21.03.90**

(30) Priority: **12.05.89 US 351196**

(43) Date of publication of application:
**14.11.90 Bulletin 90/46**

(84) Designated Contracting States:
**DE FR GB SE**

(71) Applicant: **THE TIMKEN COMPANY**
**1835 Dueber Avenue, S.W.**
**Canton, Ohio 44706(US)**

(72) Inventor: **Dougherty, John D.**
**2151 Diamond Avenue, N.E.**
**North Canton, Ohio 44721(US)**

(74) Representative: **Brooke-Smith, Fred et al**
**STEVENS, HEWLETT & PERKINS 5 Quality**
**Court Chancery Lane**
**London WC2A 1HZ(GB)**

(54) **Bearing assemblies.**

(57) A bearing assembly comprises a fixed body member 12A, a rotary member 11, a bearing by which member 11 is carried by member 12A, and a device for sensing the speed of member 11. The bearing includes two inner race rings 17, 18 two rows of rolling bearing elements 15 and outer race surfaces formed internally of body member 12A. The speed sensing device comprises a target wheel 20 fixedly mounted between the two rows of bearing elements 15 on an extension 19 of inner race ring 18, and a sensor 22 mounted in the body member and disposed in radial alignment with the target wheel.

*FIG. I.*

# BEARING ASSEMBLIES

This invention concerns bearing assemblies incorporating means for detecting the speed of a rotating member of the bearing assembly, and has a particularly useful but not exclusive application in thrust bearing assemblies for vehicle wheels where an anti-lock brake system is used.

It is well known to provide bearings with devices for sensing the relative rotational speed between the stationary and movable components of the bearing assembly. The rotary speed sensors may be of the contactless type such as is shown in U.S. Patents Nos. 4,069,435, 4,688,951 and 4,732,494. Variations of relative rotational speed sensing bearing assemblies are seen in U.S. Patent No. 4,778,286 where assembly clamping loads are taken through the target wheel which calls for the use of higher strength material such as hardened high carbon and alloy steel. This is not optimum from a magnetic stand point. This patent also shows a gear tooth profile for the target wheel formed directly on an inner race. This calls for the use of bearing steel, but the optimum is low carbon low alloy steel which is unhardened for cost considerations. In U.S. Patent No. 4,783,180 the sensor is outside the bearing assembly where it can be subject to contaminants and the like.

There are other problems encountered with prior art embodiments, chiefly the lack of protection against corrosion of the sensor devices and the ingress of moisture, and against thermal or mechanical shock damage to the sensor devices or parts thereof which must be located where there is little or no protection from external influences.

According to the present invention there is provided a bearing assembly comprising a stationary member, a rotary member, a pair of bearings including respective rows of rolling bearing elements whereby the rotary member is carried for rotation in the stationary member, and speed sensing means comprising a target wheel disposed axially between said bearings and secured to the rotary member for rotation therewith, and a sensor carried by the stationary member and disposed in radial alignment with the target wheel.

The invention will now be described in more detail with reference by way of example to the accompanying drawings, wherein:

Figure 1 is a cross-sectional view of a first embodiment of the present invention;

Figure 2 is an enlarged and fragmentary sectional view of the sensor and target wheel assembly, seen along line 2-2 in Figure 1;

Figure 3 is a fragmentary sectional view of a second embodiment of the present invention that is adapted for use in the environment of Figure 1;

Figure 4 is a fragmentary sectional view of a further embodiment of the invention for use in the environment of Figure 1;

Figure 5 is a fragmentary sectional view of another embodiment of the invention for use in the environment of Figure 1;

Figure 6 is a further fragmentary sectional view of a bipolar Hall effect sensor and target wheel configuration;

Figure 7 is a modified arrangement of a sensor and target wheel shown in fragmentary detail depicting a back bias Hall effect sensor and target wheel configuration;

Figure 8 is a detail of a sensor and target wheel having a vane interrupter; and

Figure 9 is a detail seen along line 9-9 in Figure 8.

The embodiments of the present invention are shown as being useful in anti-lock vehicle brake systems. Furthermore, the embodiments are representative of the incorporation of the speed sensing means in sealed bearing packages, although other environments for the sensors will become apparent as the description proceeds.

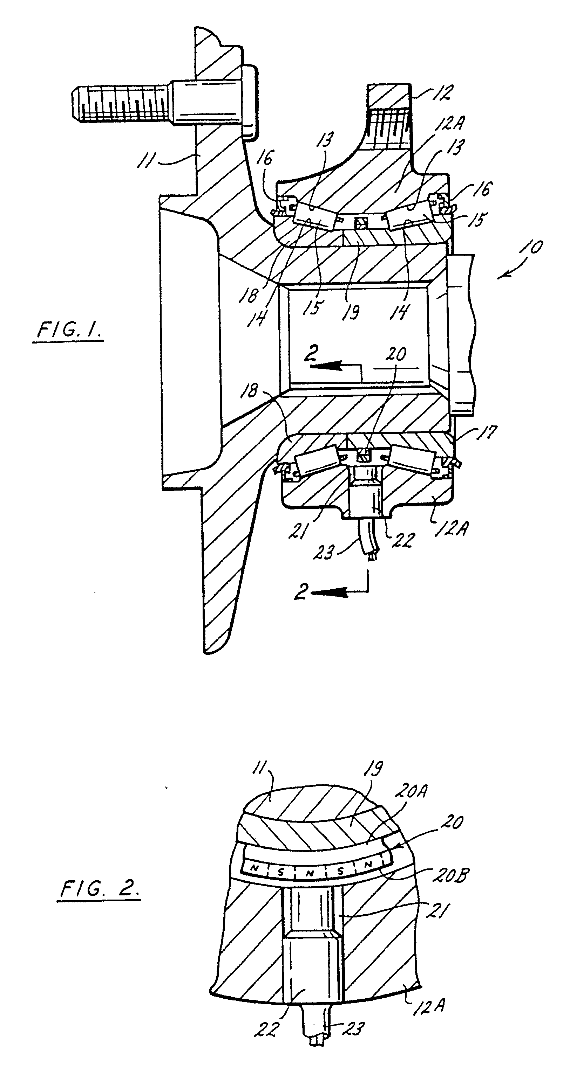

The bearing assembly 10 seen in Figure 1 comprises a body member in the form of a flanged wheel hub 11 which is rotatable relative to a stationary body member in the form of a mounting flange 12 that bolts to a typical steering knuckle. The members 11 and 12 are well known in the art.

The bearing assembly 10 includes the formation in the body 12A of flange 12 of outer bearing raceways 13 which cooperate with inner bearing raceways 14 carried by the wheel hub 11 for the reception of tapered rollers 15. The rollers 15 are sealed in operative positions by suitable seals 16. The inner bearing raceways 14 are formed in race rings in the form of cone members 17 and 18. Cone member 17 has a cylindrical extension 19 in abutment with the opposing cone member 18, so as to allow a target wheel 20 to line up opposite a radially directed aperture 21 in the body 12A. The aperture 21 receives a sensor device 22 having an electrical lead 23 extending outwardly. Target wheel 20 has a magnetic ring with alternating north and south poles around its circumference, and the sensor device 22 is a bipolar Hall device which is positioned to cooperate with the target wheel 20. The wheel 20 is fixed on the extension 19 by either mechanical means such as by a press fit or by an adhesive. In either case, proper tolerance control of the outside diameter of the extension 19 must be used to limit the range of diametrical fit. For a press fit the goal is to limit the resulting stresses in the target wheel 20 and the range of the air gap.

For the adhesive, the goal is to maximize bond strength by obtaining the optimum interface condition. The location of the target wheel 20 is selected such that it is not subjected to clamping loads which would increase the effective stress and displace the target wheel 20 in a manner such that the effective press fit is reduced with the consequent greater risk of slip. The body 12A is held stationary by its mounting flange 12, while the target wheel 20 rotates with the wheel hub flange 11.

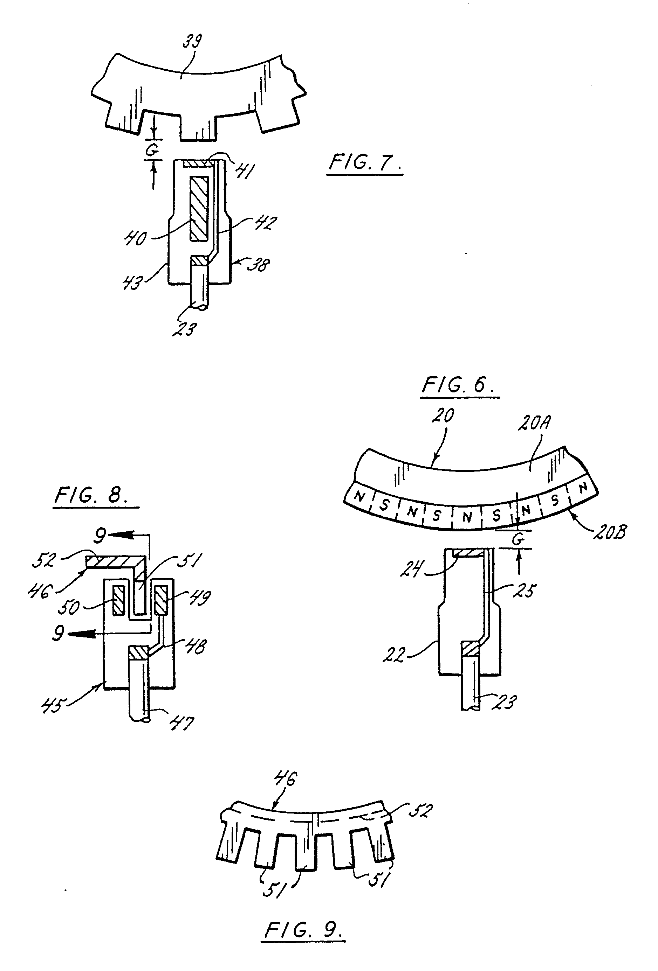

The sealed bearing assembly 10 has, therefore, embedded therein the sensor device 22 and its cooperating target wheel 20. The sensor 22 as shown in Figures 2 and 6 is preferably a bipolar Hall effect active sensor which uses a magnetic target wheel with alternating north and south poles, but can also be either a variable reluctance passive sensor or an eddy current active sensor, or a backbias Hall effect active sensor, all of which use a gear tooth type target wheel made of ferro magnetic type material. The target wheel 20 is composed of a metal insert ring 20A and a ring of magnetic material 20B.

The bearing assembly 10 with the enclosed sensor device 22 and target wheel 20 provides an output voltage signal whose frequency is proportional to the rotational speed of the wheel. The sensor output signal is compatible with the electronics which is used in an electronic control unit (ECU-not shown) of an anti-lock brake system. That signal is used by the brake system to decide whether or not the brake pressure needs to be modulated to prevent wheel lock-up. Traction control of a vehicle is another use for the enclosed device, the function of which is to apply brake pressure and/or to govern the engine when a wheel is slipping, thus maximizing tractive effort.

When the sensor 22 is an active sensor, an input DC voltage must be supplied, whereas a passive sensor requires no input. An example of a passive sensor is disclosed in U.S. Patent No. 4,778,286. The advantage of an active sensor over a passive sensor is that (a) it can sense to zero speed whereas a passive sensor is able to sense down to about 5Km/hour (3 miles/hour) and (b) the output signal does not require processing prior to being used by an anti-lock brake system. The sensor 22 seen in Figure 6 has a chip 24 connected by lead 25 to the cable 23. The ring 20B of magnetic material is magnetized with alternating north and south poles around its circumference. The metallic ring 20A allows the target wheel to be fixedly secured on the extension 19 of the cone 17 (Figure 1).

When referring to the other embodiments shown in the drawings, similar elements and components will be identified by reference numerals employed in Figures 1 and 2.

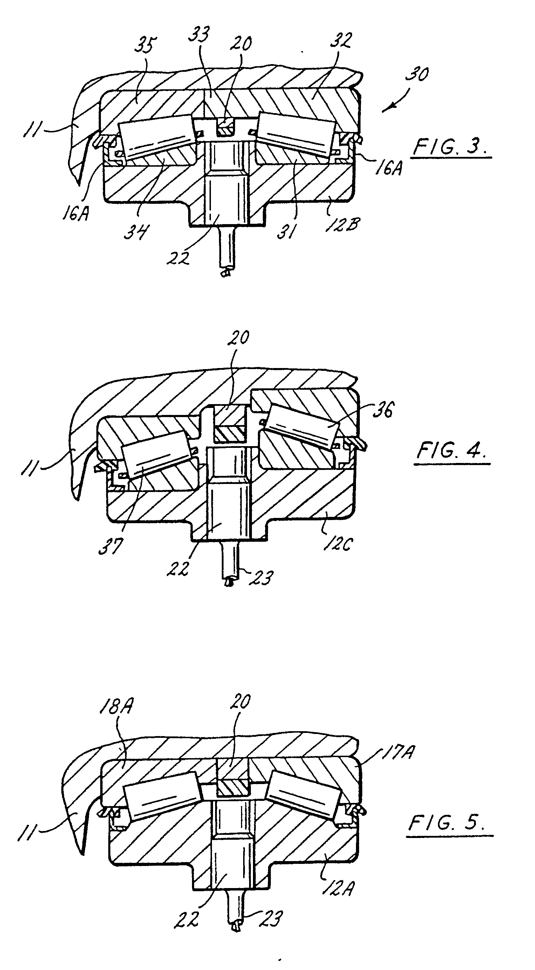

In the arrangement seen in Figure 3 the bearing assembly 30 interposed between the hub 11 and the flanged body 12B comprises two single row roller bearing sub-assemblies in which one sub-assembly has a cup 31 and a cone 32 with an extended rib 33, while the other sub-assembly has a cup 34 and a cone 35. The sub-assemblies have cooperating raceways for reception of tapered rollers which are enclosed by suitable seals 16A. The sensor device consists of a sensor 22 mounted in a boss projecting between the cones 31, 34 and a target wheel 20 fixedly secured to the extended rib 33 in line with the sensor 22.

In the arrangement seen in Figure 4 the assembly between the wheel hub 11 and the flanged body 12C comprises a pair of single row roller bearings 36 and 37 spaced apart in separate seats in the hub 11 and body 12C. The sensor 22 is inserted in an aperture in the body 12C, while the target wheel 20 is fixedly secured on a surface between the seats for the separate bearings. The arrangement of the assembly in Figure 4 is related to wheel bearing loading which typically requires higher capacity bearings and thicker hub section at the outboard position than the inboard position. This design allows different sized bearings at the inboard and outboard positions so as to provide for a minimum cost bearing package, and to allow the target wheel 20 to be secured directly to the wheel hub 11 without the target wheel being subject to clamping loads, for the reasons previously stated.

In the arrangement seen in Figure 5 the target wheel 20 is located between the inner cones 17A and 18A to allow for the use of the target wheel as the means to obtain the desired bearing setting. The setting is measured, then the axial width of the target wheel is adjusted, by stock removal, to obtain the desired bearing setting.

Figure 6 shows a section of the bipolar Hall effect device 22 seen in previous views. This device 22 uses a magnetic target wheel 20 which eliminates the need for the magnet in the sensor. The sensor has an integrated circuit chip 24 connected by leads 25 to the cable 23. The target wheel 20 comprises a ring of magnetic material 20B with alternating north and south poles around its circumference. The magnet ring 20B is combined with a metallic insert 20A which allows the target wheel to be fixedly secured to a rotating member. In this arrangement an air gap G is indicated.

Turning now to Figure 7 there is shown a speed sensor device 38 and target wheel 39 configuration depicting a back-bias Hall effect device in which a magnet 40 is positioned behind an integrated circuit chip 41 connected by a lead 42 to the cable lead 23. The sensor housing 43 encloses the above components. Target wheel 39 is a gear tooth type component made of ferro-magnetic material. In this arrangement an air gap G is indicated.

Figures 8 and 9 show a Hall effect device 45 with a vane interrupter type target wheel 46. The sensor 45 has a cable 47 connected by a lead 48 to an integrated circuit chip 49 spaced from a magnet 50. The target wheel 46 has vanes 51 around its periphery of a size to pass through the gap between the magnet 50 and the chip 49 to effect the interruption. In this assembly, the target wheel 47 having the radial vanes 51 is formed with a ring base 52 which allows the wheel to be fixedly secured to a rotating member.

The various arrangements in bearing assemblies show cooperating pairs of raceways to receive tapered rollers, and speed sensing means arranged in relation to the pairs of cooperating raceways and tapered rollers, such that by employing target wheel means in different combinations with the bearings, bearing treatment can be varied to suit load conditions, and production costs can be improved.

The above-described assemblies thus incorporate speed sensing means in the form of a sensor and target wheel can be embedded in the bearing assembly to become a part of a sealed bearing package. The assemblies incorporate, in an inexpensive manner, the sensor and target wheel in the sealed bearing to gain the protection of the speed sensing means from corrosion, thermal shock damage, and other environmental influences and hazards. At the same time, the components of speed sensing means within a sealed bearing package can be simplified to gain an advantage on the air gap range and radial runout derived from the tolerances employed in bearings under strict necessity for proper bearing performance. Also bearing life for a given package width is maximised by locating the speed sensing means between the bearing rows, thus maximizing the effective spread which has the effect of lowering the load on each bearing row thus increasing the life.

The speed sensing means are capable of producing an output signal compatible with the electronics used in the electronic control unit of the anti-lock brake and traction control systems and of providing an active sensor that is able to sense zero speed and has an output signal that does not require processing prior to being used by the logic circuits of the anti-lock brake system, as well as having roller bearings carry the speed sensor means with the least modifications to the bearing components.

## Claims

1. A bearing assembly comprising a stationary member, a rotary member, a pair of bearings including respective rows of rolling bearing elements whereby the rotary smember is carried for rotation in the stationary member, and speed sensing means comprising a target wheel disposed axially between said bearings and secured to the rotary member for rotation therewith, and a sensor carried by the stationary member and disposed in radial alignment with the target wheel.

2. A bearing assembly as claimed in claim 1, wherein said bearings comprise respective inner race rings and wherein said target wheel is carried by one of said inner race rings.

3. A bearing assembly as claimed in claim 1, wherein said bearings comprise respective inner race rings and wherein said target wheel is positioned between said race rings.

4. A bearing assembly as claimed in claim 3, wherein said race rings abut opposite axial sides of the target wheel whereby the target wheel determines the spacing between said inner race rings.

5. A bearing assembly as claimed in any one of the preceding claims, wherein said target wheel comprises a bipolar ring having alternating north and south poles extending circumferentially around said ring and presented to said sensor means.

6. A bearing assembly as claimed in any one of claims 1 to 4, wherein said target wheel comprises a ring member composed of a metallic insert carrying a body of a bipolar magnetic material with alternating north and south poles around its circumference.

7. A bearing assembly as claimed in any one of claims 1 to 4, wherein said sensor means is formed with an axial gap into which said target wheel projects and wherein said target wheel is a ring formed with circumferentially spaced vanes which pass through said axial gap for interrupting sensor responses to said target wheel.

8. A bearing assembly as claimed in any one of claims 1 to 4, wherein said target wheel is a gear tooth type having circumferentially spaced teeth presented to said sensor means.

EP 0 397 309 A2

FIG. 1.

FIG. 2.

*FIG. 3.*

*FIG. 4.*

*FIG. 5.*

EP 0 397 309 A2

FIG. 7.

FIG. 6.

FIG. 8.

FIG. 9.